# EUROPEAN PATENT APPLICATION

(11) **EP 1 921 778 A2**
(43) Date of publication of application: **14.05.2008**
(21) Application number: 07021630.4
(22) Date of filing: 07.11.2007
(51) Int. Cl.: H04H 20/26

(54) **Method and apparatus for transmitting and receiving service variation information in digital broadcasting system**

(30) Priority: 07.11.2006 US 857116 P; 20.06.2007 KR 20070060811
(71) Applicant: Samsung Electronics Co., Ltd., Suwon-si, Gyeonggi-Do (KR)
(72) Inventor: Xu, Yiling, Suwon-shi Gyeonggi-do (KR); Song, Jae-Yeon, Suwon-shi Gyeonggi-do (KR); Lee, Kook-Heui, Suwon-shi Gyeonggi-do (KR)
(74) Representative: Lang, Johannes

(57) **Abstract**

Provided are a method and apparatus for indicating service variation in a Convergence of Broadcasting and Mobile Service (CBMS) system. A network entity aggregates information about a first service that can be provided by a current network and information about a second service of associated another network in order to generate service variation information indicating whether at least one of a language, a subtitle, and a camera angle of the second service is changed when compared to the first service, and transmits the service variation information to a terminal in the current network over a broadcasting network or an interactive network. The terminal can determine whether to receive the second service continuously from the first service from the other network using the service variation information.

## Description

### BACKGROUND OF THE INVENTION

### 1. Field of the Invention

The present invention relates to a digital broadcasting system, and in particular, to a method and apparatus for indicating broadcasting service variations in a Convergence of Broadcasting and Mobile Service (CBMS) system.

### 2. Description of the Related Art

Recently, due to the development of communication and broadcasting technology, broadcasting systems or mobile communication systems provide mobile broadcast. In particular, mobile broadcast capable of transmitting packet data as well as a typical broadcasting service limited to audio and video data over a broadcast channel is under consideration. Mobile broadcast may include discovering a service by a mobile terminal capable of receiving a mobile broadcasting service, such as a cellular phone, a notebook, a Personal Digital Assistant (PDA), or the like, subscribing to the service by the mobile terminal, providing various control information for receiving the service, transmitting the service, and receiving the service by the mobile terminal.

The Open Mobile Alliance (OMA), which is one organization that studies standards for the interworking between separate mobile solutions, mainly establishes various application standards for mobile communication games, Internet services, and the like. Among working groups of the OMA, a sub working group of OMA Browser and Content (BAC) Mobile Broadcast (BCAST) is engaged in active research to integrate a broadcasting service and a mobile communication service using a mobile terminal capable of communicating with an interactive network. The Digital Video Broadcasting (DVB) - Convergence of Broadcasting and Mobile Service (CBMS), which is one of mobile broadcast terminal standard organizations, has also made an effort to define a system structure and an interface for integrating a broadcasting service and a mobile communication service.

In a digital broadcasting system like a CBMS system, service continuity has to be guaranteed when an Internet Protocol (IP) platform, a service provider, a network, or a frequency for a terminal that is receiving a service is changed. When compared with the service that the terminal is currently receiving, a service from another IP platform, provider, and/or network may not be totally the same, but may have some variations. Thus, there emerges a need for a technique that helps the terminal to determine whether to receive a service provided through another IP platform, service provider, network, frequency continuously from the current service.

### SUMMARY OF THE INVENTION

An aspect of the present invention is to address at least the above problems and/or disadvantages and to provide at least the advantages described below. Accordingly, an aspect of the present invention is to provide a method and apparatus for determining service continuity in terminal's handover or roaming.

Another aspect of the present invention is to provide a method and apparatus for indicating variation in a service that a terminal is receiving to the terminal in order to determine service continuity for the terminal.

According to one aspect of the present invention, there is provided a method for transmitting service variation information in a digital broadcasting system. The method includes aggregating information about a first service that can be provided by a first network and information about a second service in a second network related to the first service, generating service variation information indicating variations between the second service and the first service, and transmitting the service variation information to a terminal in the first network through a predetermined transmission bearer.

According to another aspect of the present invention, there is provided a method for receiving service variation information in a digital broadcasting system. The method includes receiving service variation information indicating variations between a second service in a second network and a first service that can be provided by a first network from the current network through a predetermined transmission bearer, the second service relating the first service, determining whether to receive the second service from the second network continuously from the first service using the received service variation information, and receiving the second service continuously from the first service when moving to the second network if determining to receive the second service.

According to another aspect of the present invention, there is provided a digital broadcasting system which transmits service variation information. The digital broadcasting system includes a network entity for aggregating information about a first service that can be provided by a first network and information about a second service in a second network related to the first service, generating service variation information indicating variations between the second service and the first service, and transmitting the service variation information through a predetermined transmission bearer, and a terminal for receiving the service variation information through the transmission bearer, determining whether to receive the second service from the second network continuously from the first service using the received service variation information, and receiving the second service continuously from the first service when moving to the second network if determining to receive the second service.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1 is a block diagram illustrating the structure of a Convergence of Broadcasting and Mobile Service (CBMS) system according to an exemplary embodiment of the present invention;
FIGs. 2A and 2B illustrate examples of service variation according to an exemplary embodiment of the present invention;
FIG. 3 is a flowchart illustrating the operation of a network entity according to an exemplary embodiment of the present invention;
FIGs. 4A through 4C are flowcharts illustrating the operation of a terminal according to an exemplary embodiment of the present invention;
FIG. 5 is a block diagram illustrating the structure of a network according to an exemplary embodiment of the present invention; and
FIG. 6 is a block diagram illustrating the structure of a terminal according to an exemplary embodiment of the present invention.

Throughout the drawings, the same drawing reference numerals will be understood to refer to the same elements, features and structures.

### DETAILED DESCRIPTION OF THE EXEMPLARY EMBODIMENT

The matters defined in the description such as a detailed construction and elements are provided to assist in a comprehensive understanding of an exemplary embodiment of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness. Terminologies used below are defined considering functions in the present invention, and the terminologies can be changed according to a user, an operator's intention, or custom. Therefore, the definition must be drawn on the basis of contents over this application.

A main concept of the present invention to be described below is to indicate broadcasting service variations in a Convergence of Broadcasting and Mobile Service (CBMS) system. A broadcasting service variation may mean, for example, a variation in a broadcasting service for a new network when compared to a home network during handover or roaming. Herein, the broadcasting service may include both broadcasting content and other information corresponding to a single service or only the broadcasting content. A broadcasting service variation may also mean a variation in the broadcasting service for another Internet Protocol (IP) platform, another service provider, another network, another frequency, and the like.

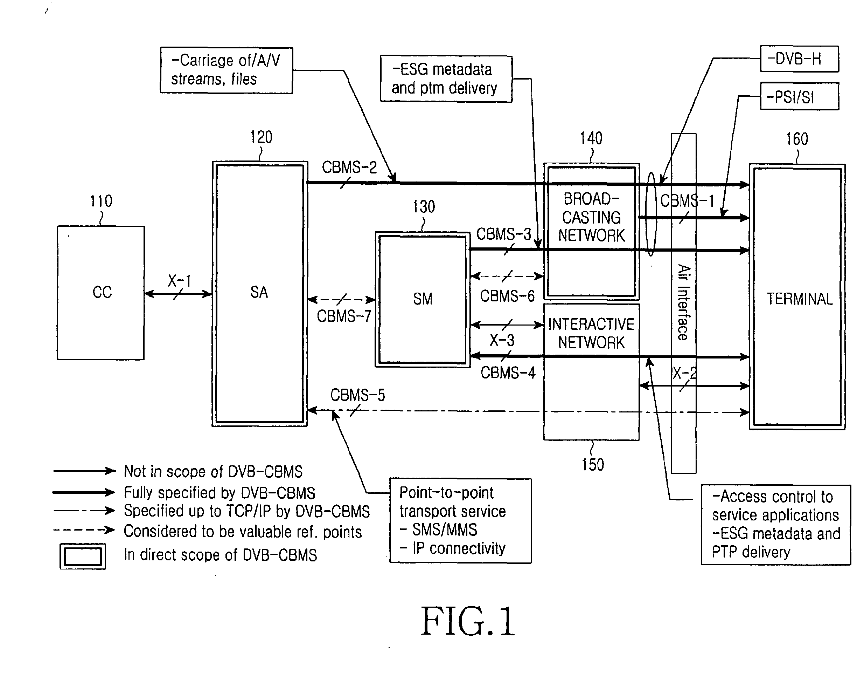

FIG. 1 is a block diagram illustrating the structure of a CBMS system according to an exemplary embodiment of the present invention. In FIG. 1, a collection of logical entities that work together in order to achieve required capabilities for IP Data Cast (IPDC) over Digital Video Broadcasting-Handheld (DVB-H) are shown. The logical entities are shown separately according to their main capabilities and may be located in physically separate servers or in the same server.

Referring to FIG. 1, a Content Creation (CC) block 110 creates content sources of a broadcasting service and delivers the same to a Service Application (SA) block 120. The SA block 120 is head-end application logic that aggregates the content sources from the CC block 110 and metadata additionally required for service configuration in order to generate service data for a particular service. The SA block 120 provides content encoded in a format that can be understood by a terminal via either streaming or carousel delivery. The SA block 120 also generates service description metadata used for an Electronic Service Guide (ESG), operates as an interaction end point for terminals by interworking with other SA blocks, and provides service protection. To this end, the SA block 120 includes several sub-entities for managing different applications for each service. Each SA entity may exist to provide IPDC.

A Service Management (SM) block 130 includes sub-entities that independently perform service configuration, resource allocation, and other functions between the SA block 120 and a terminal 160. For example, the SM block 130 may include the following four sub-entities, each of which can be taken as an example independently.

A service configuration and resource allocation entity registers service applications that contend for the bandwidth of a broadcast bearer (one DVB-H IP platform in one DVB transport stream), assigns services to locations (broadcasting network topology) and to bandwidth and schedules services over time, and may experience broadcast bandwidth contention. A service guide provisioning application entity aggregates ESG (metadata information) pieces from SA entities and may have multiple occurances. A security/service protection provision entity manages user access to SA entities. A location services entity provides location services to service applications in an independent fashion by interworking with an interactive network or a Global Positioning System (GPS).

A broadcasting network 140 is a network for transmitting broadcast service data and may be, for example, a DVB-H system. An interactive network 150 generally means a cellular mobile communication network such as Universal Mobile Telecommunications System (UMTS) according to the 3^{rd} Generation Partnership Project (3GPP), International Mobile Telecommunications (IMT)-2000 according to the 3GPP2, Wireless and Broadband Internet (WiBro), or Wireless Local Area Network (WLAN), or any type of mobile communication network capable of receiving information or requests transmitted from the terminal 160 and transmitting responses to the information or requests. The broadcasting network 140 and the interactive network 150 operate as transmission bearers in a CBMS system.

The terminal 160 is a user device that is a receiver capable of accessing the interactive network 150 and receiving a broadcasting service from the broadcasting network 140. In a CBMS system, the terminal 160 receives service data and signaling information from the broadcasting network 140 and interactively communicates service data and signaling information with the interactive network 150. For example, the terminal 160 may include the following sub-entities.

A DVB-H receiver is in charge of service reception or signaling over the broadcasting network 140. An interactive adaptor is in charge of the service reception/transmission or the signaling over the interactive network 150. A Mobility Management (MM) block is in charge of a mobility process. A subscription management block manages rights acquisition, keeps track of rights acquired for the terminal 160, and controls a decryption process for service content. A content consumption block is in charge of service consumption.

In the following description, the interfaces between the entities including the logical entities will be described. CBMS-x and X-x are reference points between different functional entities. CBMS-x is a reference point in the scope of IPDC over DVB-H specification and X-x is a reference point out of the scope of IPDC over DVB-H specification.

A CBMS-1 interface delivers broadcasting-specific signaling, e.g., Program Specific Information and Service Information (PSI/SI) signaling, in DVB-H, from the broadcasting network 140 to the terminal 160. A CBMS-2 interface delivers contents such as audio data, video data, and file data from the SA block 120 to the terminal 160. A content flow delivered through the CBMS-2 interface includes Audio/Video (A/V) streams, auxiliary data, and files delivered by a carousel mechanism (clips, software, etc).

A CBMS-3 interface delivers ESG metadata over the broadcasting network 140 using Point-To-Multipoint (PTM) delivery from the SM block 130 to the terminal 160. A CBMS-4 interface is used for access control to service applications of the SA block 120 and Point-To-Point (PTP) delivery of ESG metadata between the SM block 130 and the terminal 160. A CBMS-5 interface is used for PTP transport services between the SA block 120 and the terminal 160, and delivers a Short Message Service (SMS), a Multimedia Message Service (MMS), and the like using PTP delivery over the interactive network 150.

A CBMS-6 interface delivers configuration parameters for DVB-H transport, such as the number of services, allocated bandwidth, and the like, between the SM block 130 and the broadcasting network 140. A CBMS-7 interface is used for service application declaration or service application description including content description and metadata between the SA block 120 and the SM block 130.

X-1, X-2, and X-3 interfaces are reference points between the broadcasting network 140 and other entities. The X-1 interface is used between the CC block 110 and the SA block 120 and delivers content essence, content description/metadata, and content control policy to the SA block 120. The X-2 interface is used to deliver interactive network-specific interactions, i.e., authentication, mobility management, specific services such as voice, and the like between the interactive network 150 and the terminal 160. The X-3 interface is used to access specific functions that are available in the interactive network 150, such as subscriber management or billing functions, between the SM block 130 and the interactive network 150.

The above description involves only representative functions of the interfaces and the functions of the interfaces are not limited to the above-described functions.

In a CBMS system, one service management instance is mapped to one IP platform. Thus, "within one platform" means "within one SM block 130", and for example, another IP platform means another SM block, i.e., an SM block included in another network.

When a terminal moves to a new service coverage area included in another IP platform, service provider, network, and frequency when receiving a broadcasting service in a digital broadcasting system, the terminal needs to determine whether it can receive a service that is similar to the current broadcasting service in the new service coverage area. For example, the movement of the terminal may subject the terminal to roaming or handover. In a CBMS system, roaming and handover can be defined variously according to different rules, e.g., IP platform variation, a provider (ESG, service and/or other providers) variation, SM block variation, and network variation. In the following description, terms used herein will be defined in brief.

An IP platform is a set of IP flows managed by an organization and one IP platform can be mapped to one SM block. An ESG provider, a service provider, an interactive network, and a broadcasting network can be defined by standard rules or a system designer of a corresponding system.

An identifier (ID) for each component can be described as follows.

The IP platform is identified by an IP platform ID. Herein, the ESG provider is identified by providerURI, providerID, the pair of providerURI and providerID, or other parameters according to definition and description in a system. Herein, the service provider is identified by serviceproviderURI, serviceproviderID, the pair of serviceproviderURI and serviceproviderID, or other parameters according to definition and description in a system. The network is identified by a network ID.

The SM block is identified according to relationship with the IP platform. For example, when one SM is mapped to one IP platform, the IP platform ID may be used as an SM ID. In another case, an SM ID that can be set independently of the IP platform ID can be used. Other various schemes for identifying the SM block may also be used as follows.
1. When one service provider has its own SM block, a service provider ID is used to identify the SM block. When a service provider is unique in an IP platform, a pair of a service provider ID and an IP platform ID is used as an SM ID. When a predetermined range of a service provider ID is unique, the range of the service provider ID is used as an SM ID.
2. When each ESG provider is located in its own SM block, an ESG provider ID is used as an SM ID. When the ESG provider is unique only within an IP platform, the pair of the ESG provider ID and an IP platform ID is used as an SM ID. When the range of an ESG provider ID is unique, it is used as an SM ID.
3. When one IP platform is exactly mapped to one SM block and different SM blocks cannot share the one IP platform, an IP platform ID is used to identify the SM block.
4. Defining an SM ID for each SM block is the clearest way to identify each SM block. When an SM ID has a specific range, the pair of the SM ID and an ID for the specific range of the SM ID is used to identify the SM block.
5. An SM block may be identified according to the structure and description of a system.

The definition of handover and roaming may be based on the IP platform variation. If a terminal is within the same IP platform even after moving, this case corresponds to handover. If a terminal is in another IP platform after moving, this case corresponds to roaming. Thus, the IP platform ID is an important parameter for distinguishing handover and roaming. A rule for distinguishing handover and roaming can be expanded to an interactive network. As mentioned previously, distinguishment between handover and roaming is determined based on an IP platform , an ESG provider, a service provider, an SM block, an IPDC domain, a network, or other concepts.

Thus, herein, the definition of mobility is general rather than specific. Regardless of the structure and definition, an idea suggested in the present invention can still be used. In other words, a rule for the definition of handover and roaming can be an IP platform, an ESG provider, a service provider, an SM block, an IPDC domain, a network, or the like. Herein, when related parameters, e.g., IDs, are required, all of them are listed. Therefore, all of them or some of them may be needed or other new parameters may also be needed. These fields can be modified, added, removed, or replaced according to final definition in a CBMS system.

The structure, concept, and parameters may be changed according to final definition in a CBMS system, but an idea proposed in the present invention can still be adopted and may be with some modification based on final definition in the CBMS system.

When a service a terminal currently consumes will not be available in a new service coverage area, but the terminal desires to continue consuming the current service, the terminal changes the reception parameters to be suitable for, for example, an IP platform, a service provider, a network, a frequency, and the like corresponding to the new service coverage area. A new service received through the changed reception parameters may be the same as or slightly different from the service received in the previous service coverage area.

If the service the terminal receives has some variation, it will be beneficial to the terminal and a user to indicate what those variations are. Thus, when the service the terminal currently receives changes in the new service coverage area, the current network transmits service variation information indicating what variation there is in a service provided in neighboring another service coverage area when compared to the current service of the current network to the terminal in order to guarantee service continuity during the movement of the terminal. The another service coverage area is a service coverage area that is included in an IP platform, a service provider, or a network that is different from with the current service coverage area in which the terminal is currently located or a service coverage area that uses a frequency that is different from with the current service coverage area. In a CBMS system, there are two kinds of transmission bearers, i.e., a broadcasting network and an interactive network. Therefore, the service variation information can be transmitted over the interactive network and/or the broadcasting network.

The terminal determines whether the changed service that can be received continuously from the current service exists within the another service coverage area by referring to the service variation information when moving to the other service coverage area. If so, the terminal receives the changed service continuously from the current service. More specifically, the terminal recognizes what type of service variation there is in the service and whether the service variation is acceptable based on the service variation information. By doing so, the terminal or the user can determine whether to receive the changed service. As such, the terminal acquires the service variation information before starting reception of the changed service.

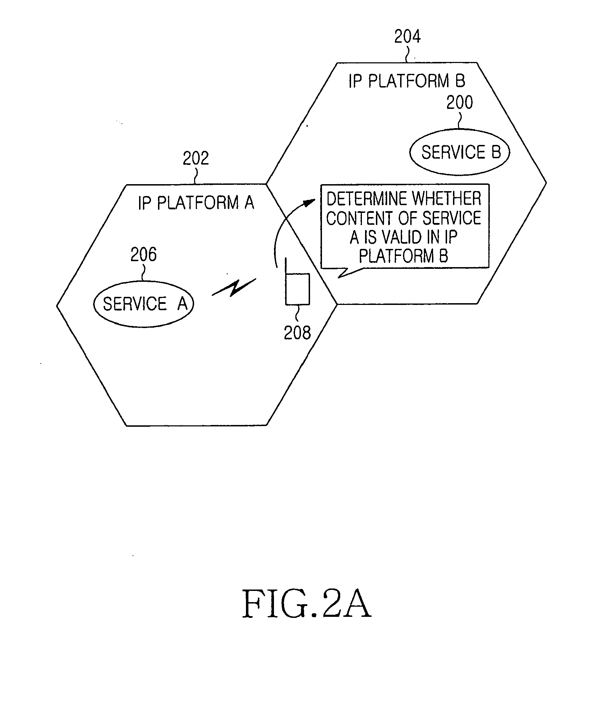

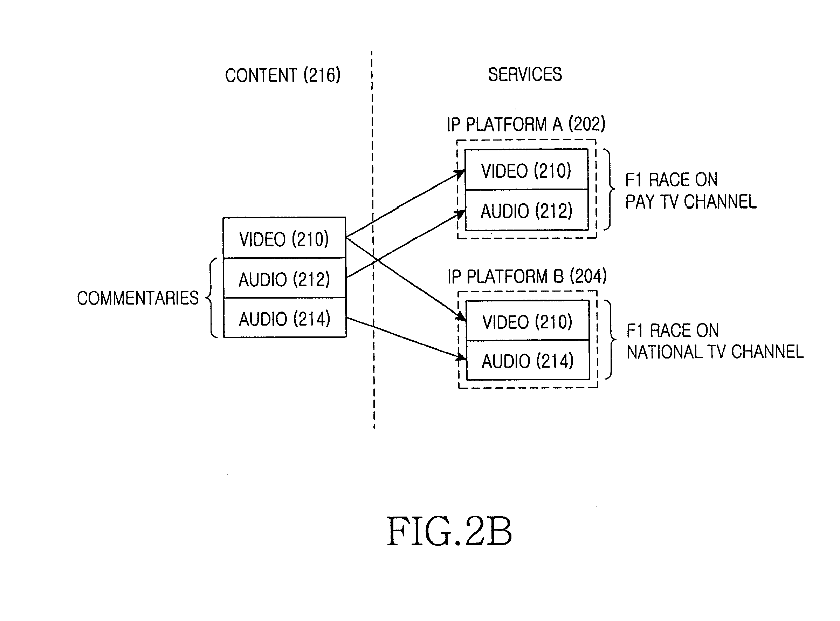

FIGs. 2A and 2B illustrate examples of service variation according to an exemplary embodiment of the present invention, in which handover with IP platform variation is illustrated.

Referring to FIG. 2A, a terminal 208 receives a service A 206 in an IP platform A 202 and then moves to a service coverage of an IP platform B 204. During the movement, the terminal 208 refers to the service variation information received in the IP platform A 202 in order to determine whether content of the service A 206 is valid in the IP platform B 204.

An example of a changed service provided in the IP platform B 204 is illustrated in FIG. 2B.
Referring to FIG. 2B, the original content 216 related to the service A 206 includes one video stream 210 and different audio streams A 212 and B 214 based on the locations. The video stream 210 is provided in both the IP platform A 202 and the IP platform B 204, but the audio stream A 212 is provided only in the IP platform A 202 and the audio stream B 214 is provided only in the IP platform B 204. Thus, the service A 206 provided in the IP platform A 202 includes the video stream 210 and the audio stream A 212, and a service B 200 provided in the IP platform B 204, which is a changed service of the service A 206, includes the video stream 210 and the audio stream B 214.

Representative examples of the original content 216 may include world wide news, live sport broadcasts, and the like. The live sport broadcasts usually have the same video content 210, but their audio content is country specific. In other words, for the same video stream 210 of the live sport broadcasts, a plurality of different audio streams 212, 214, e.g., commentaries broadcasted in different languages or commentaries made by different commentators even in the same languages, may exist. For example, the IP platform A 202 provides channels for Pay-TV and the IP platform B 204 provides channels for national TV channel.

The service variation information provided in the IP platform A 202 indicates how the service B 200 is changed from the service A 206. Details of the service variation information can be defined by a service provider or a provider of the service variation information. For example, the service variation information may indicate service variation such as a different language, a different subtitle, a different camera angle, and the like.

Examples of three types of service variation will now be described. However, details of the service variation information according to an exemplary embodiment of the present invention are not limited to these three types of service variation and other types of service variation desired by a provider may also be added to those three types.
1) A service with a different language means the same service expressed in a different language.
2) A service with a different subtitle means the same service having a different subtitle.
3) A service with a different camera angle means the same service having video acquired from a different camera angle.
The following Table 1 is a summary of the service variations.

**Table 1**

| | Classification | Description |
|---|---|---|
| 1 | Service with different language | Same service with different language |
| 2 | Service with different subtitle | Same service with different subtitle |
| 3 | Service with different camera angle | Same service with different camera angle video |

Thus, service variation information between services can be provided as in the following Table 2. In Table 2, information related to a service ID and a location can be changed according to the definition of handover and roaming. Although possible related parameters are provided herein, they may be removed, added, or modified according to CBMS final definition and requirements. While there are various syntaxes for service variation, a main idea is as shown in Table 2.

**Table 2**

| | | | Service A | Service A' |
|---|---|---|---|---|
| Service ID and Location | | | Service ID | Service ID' |
| | | | IP address | IP address' |
| | | | ESG provider ID | ESG provider ID' |
| | | | IP platform ID | IP platform ID' |
| | | | Service provider ID | Service provider ID' |
| | | | SM ID | SM ID' |
| | | | Network ID | Network ID' |
| | | | | Access information |
| Service Variation Type | 1. Service with different language | 0: means that languages between two services are the same | | |
| | | 1: means that languages between two services are different | Language type used by service A | Language type used by service A' |
| | 2. Service with different subtitle | 0: means that subtitles between two services are the same | | |
| | | 1: means that subtitles between two services are different | Subtitle type used by service A | Subtitle type used by service A' |
| | 3. Service with different camera angle | 0: means that camera angles between two services are the same 1: means that camera angles between two services are different | Camera angle type used by service A | Camera angle type used by service A' |

The service variation information for indicating details of service variation to a terminal is delivered over a broadcasting network or an interactive network. For example, the service variation information is included in an ESG, a notification message, PSI/SI, or other signaling. When carried in the ESG, the service variation information may be added to a service type Information Element (IE) or a service mapping IE of a service fragment that includes the overall description of each service that can be provided, may be added to a new IE of the service fragment, or may be included in a content fragment, an acquisition fragment, or other fragments. When delivered over the interactive network, the service variation information may be included in a response message to a terminal's request message.

The following tables show examples of a service variation type IE included in the service variation information. In addition to the service variation types shown in Tables 3A and 3B, other service variation types may also be defined by a provider.

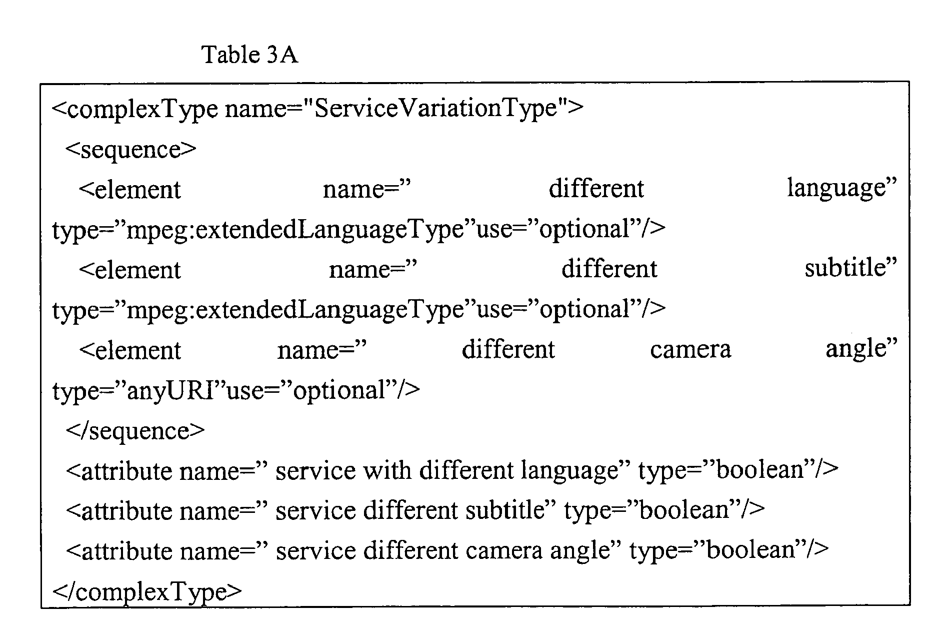

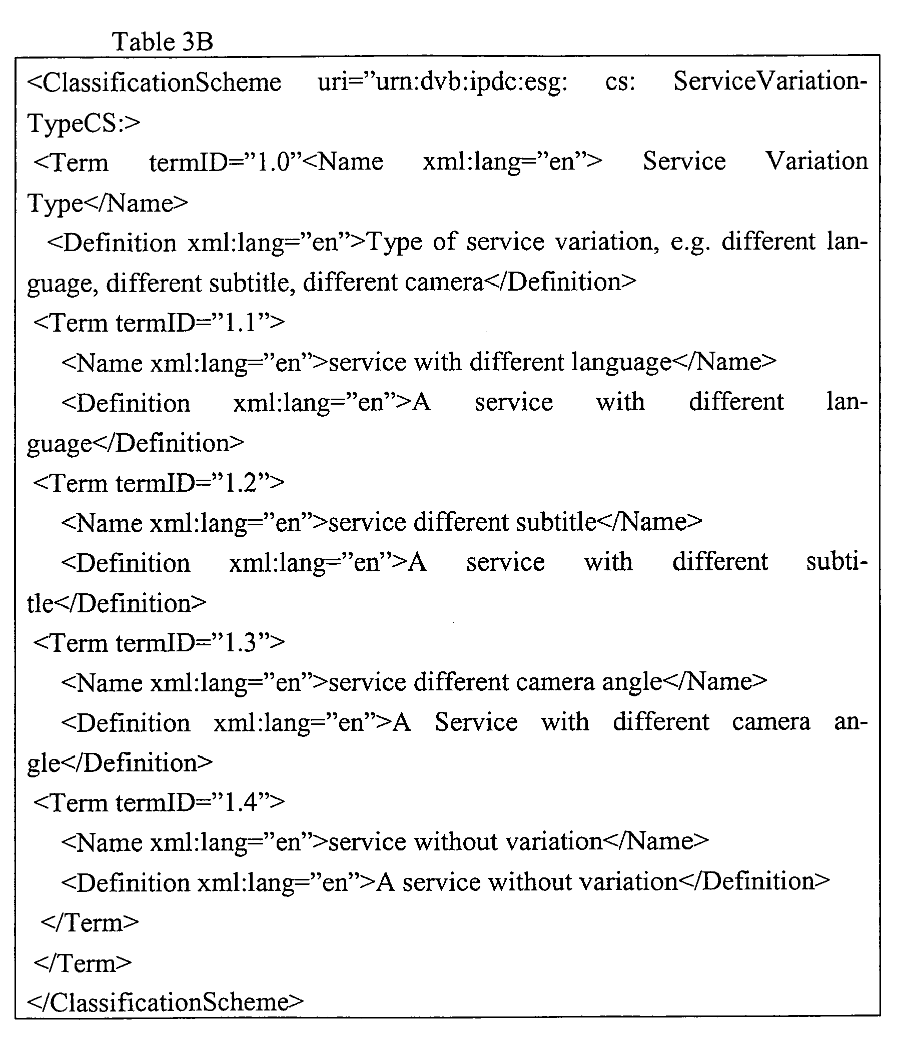

Two services may have the same language, different subtitles, and different camera angles. In this case, Table 3B can be modified to Table 3C.

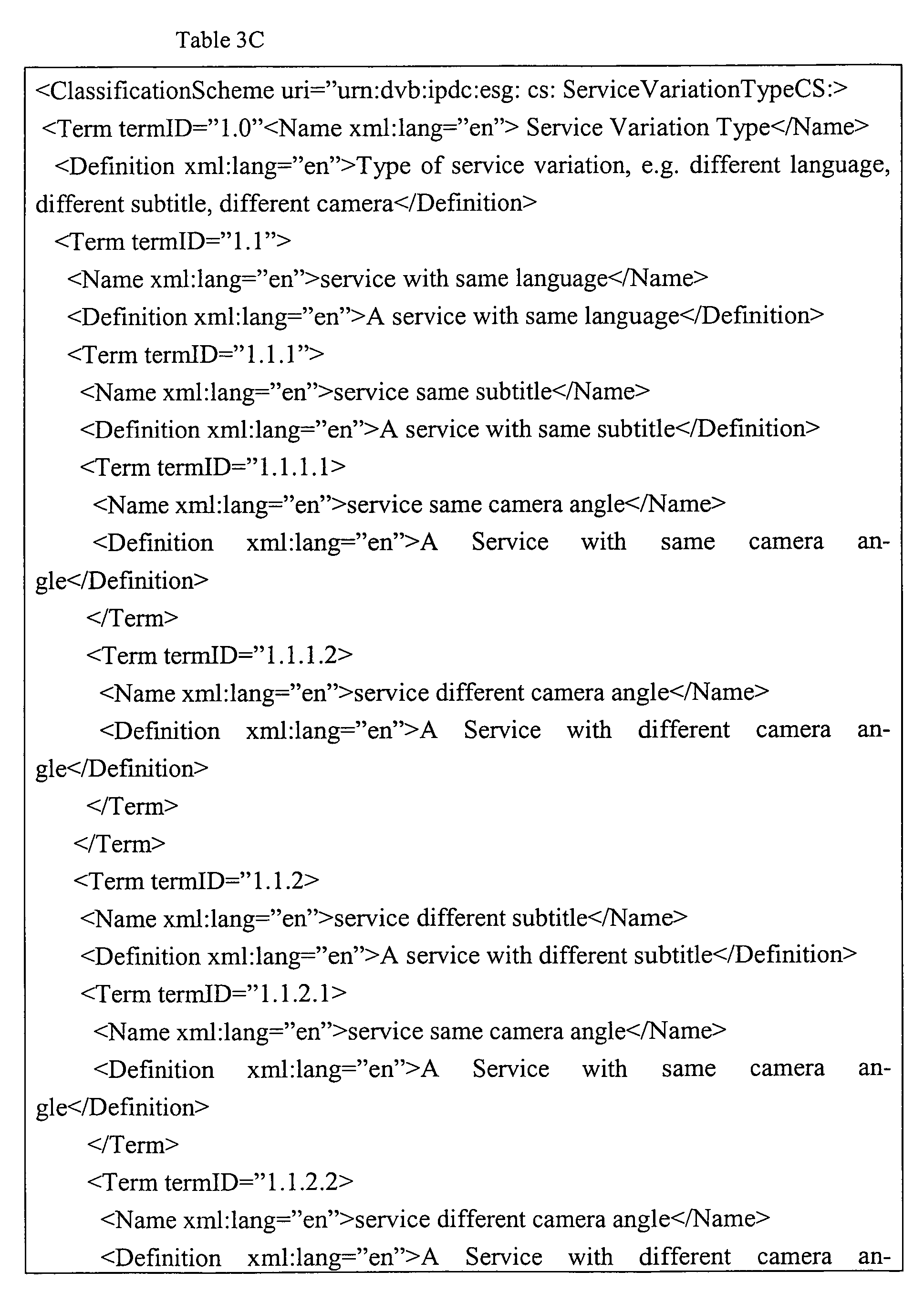

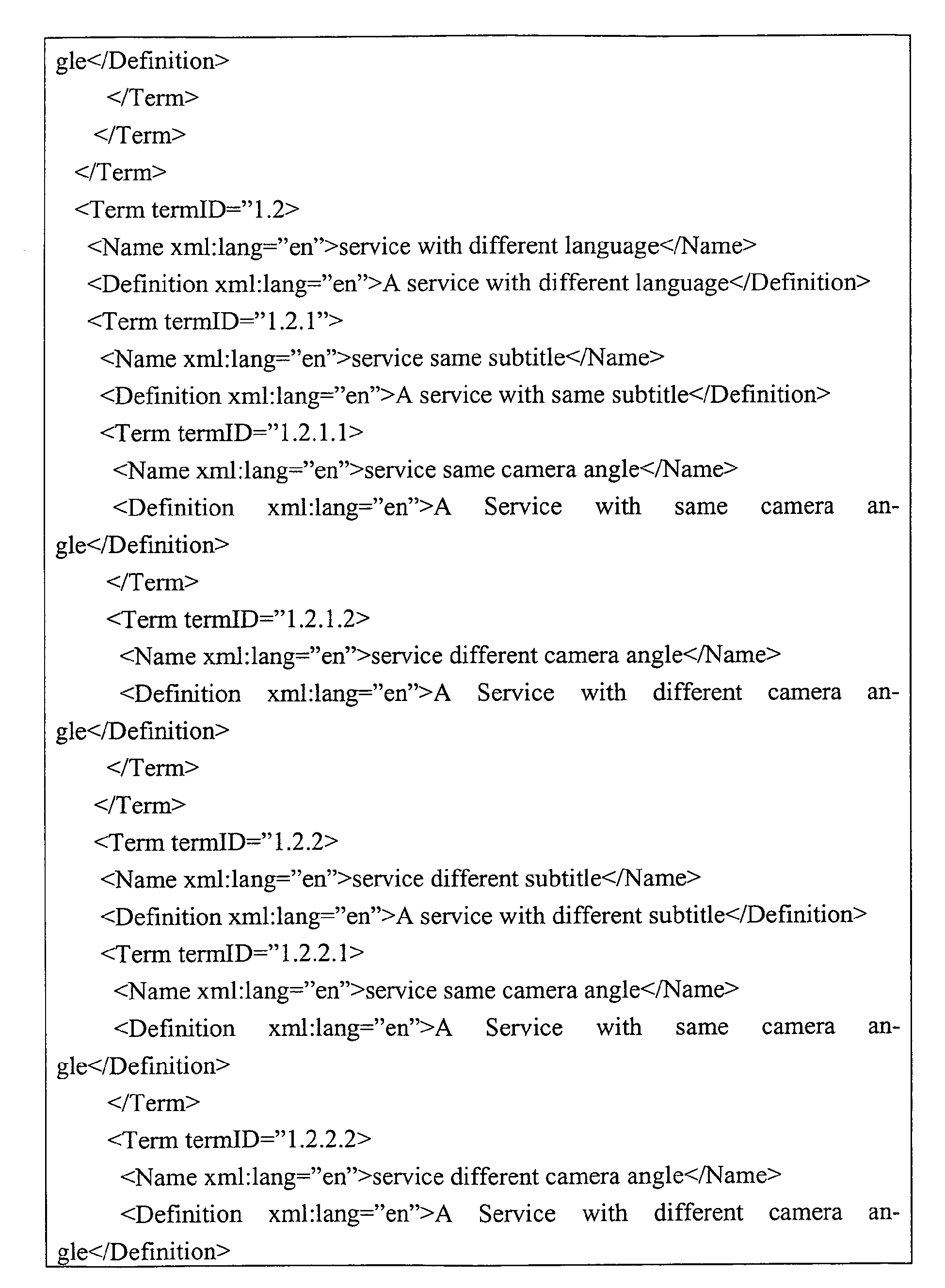

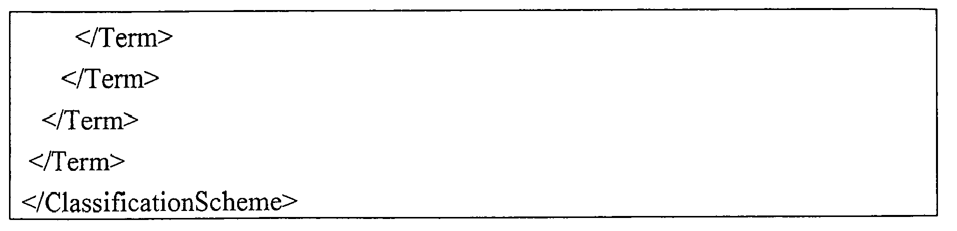

Tables 4A and 4B show details of the service variation information indicating languages/subtitles/camera angles available for different services.

For services with different languages, subtitles, and/or camera angles, available languages, subtitles, and/or camera angles may be indicated. Details regarding a service ID and a location can also be indicated as in Table 4A or Table 4B. For example, for the definition of an ESG provider ID and a service provider ID, other parameters, e.g., a positive integer, instead of a Uniform Resource Identifier (URI) type, may be used.

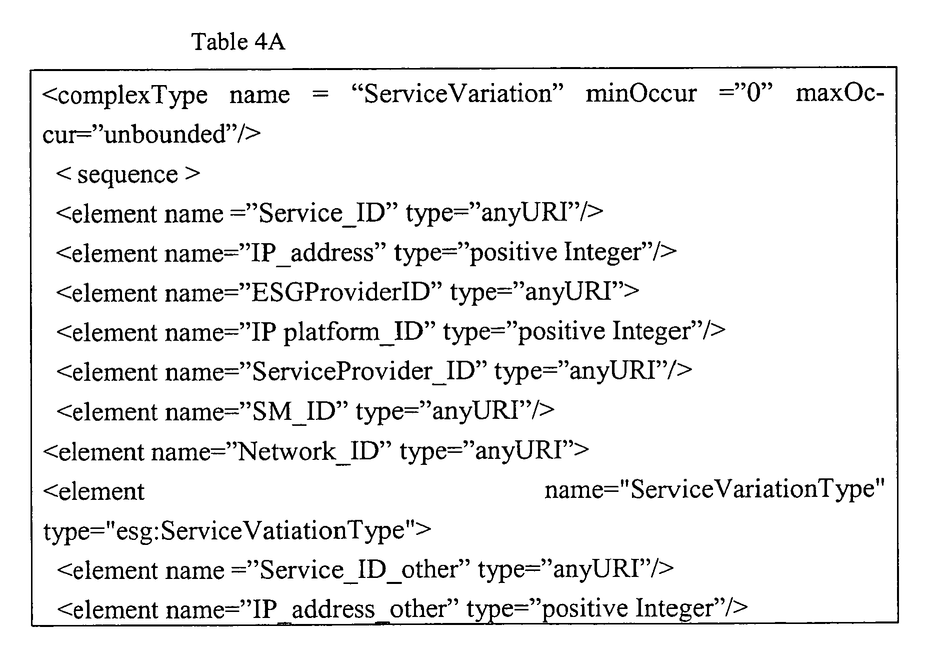

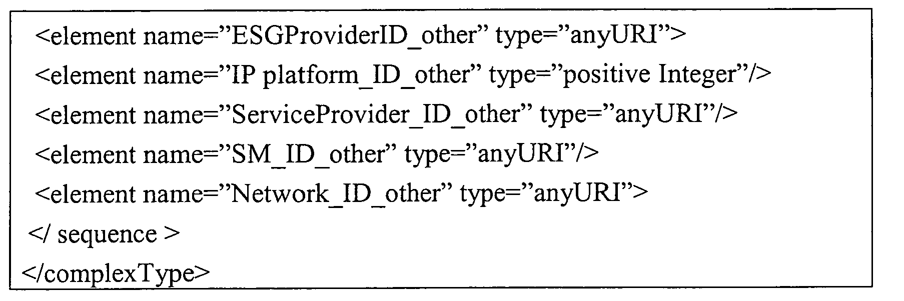

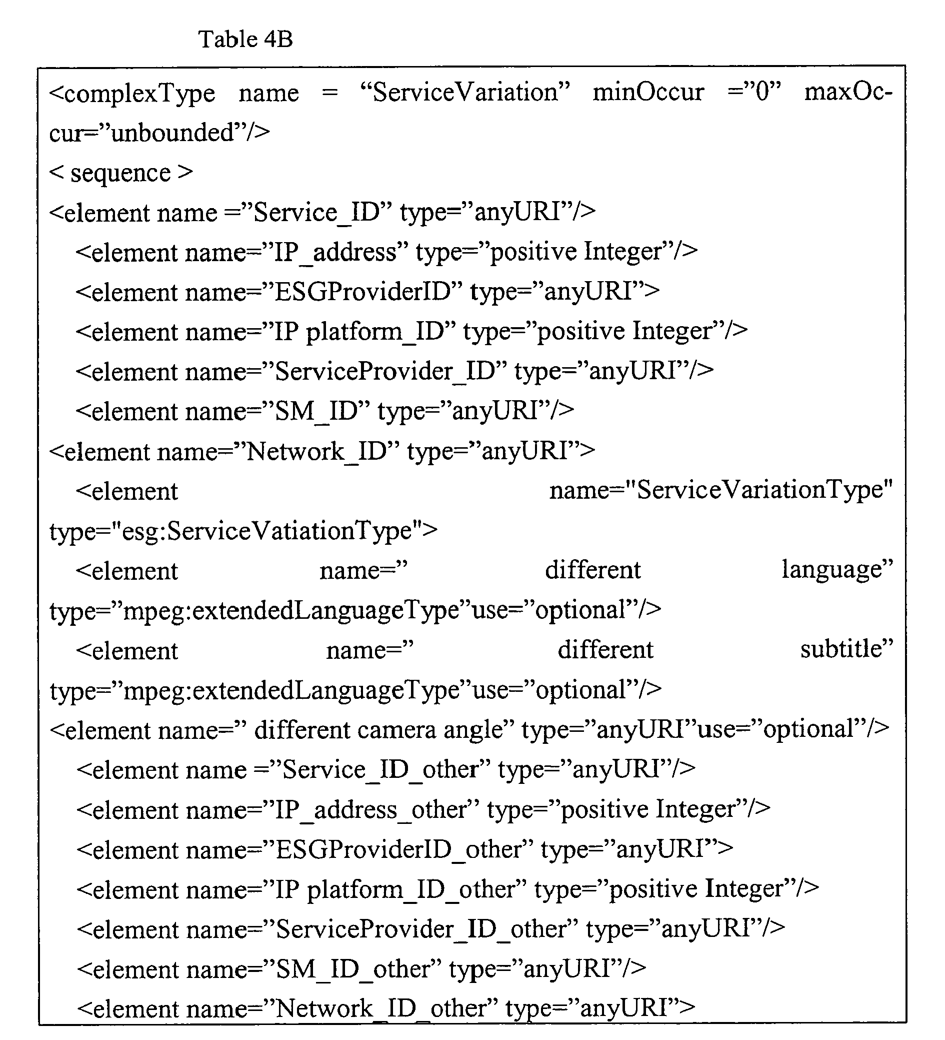

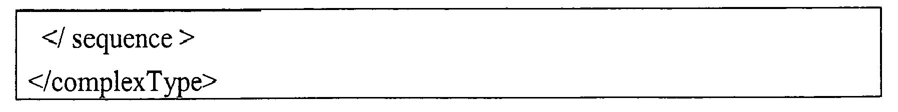

A changed service of the current service provided in the current network is identified by at least one of another service ID (service_id_other), another IP address (IP _address_other), another provider ID (provider_id_other), another IP platform ID (IP platform_id_other), and another network ID (network_id_other). IEs for a service variation type, a language, a subtitle, and/or a camera angle of the changed service are also included in the service variation information.

The service variation information may be included in service mapping information indicating mapping of a neighboring network to a service of the current network as in Table 5A.

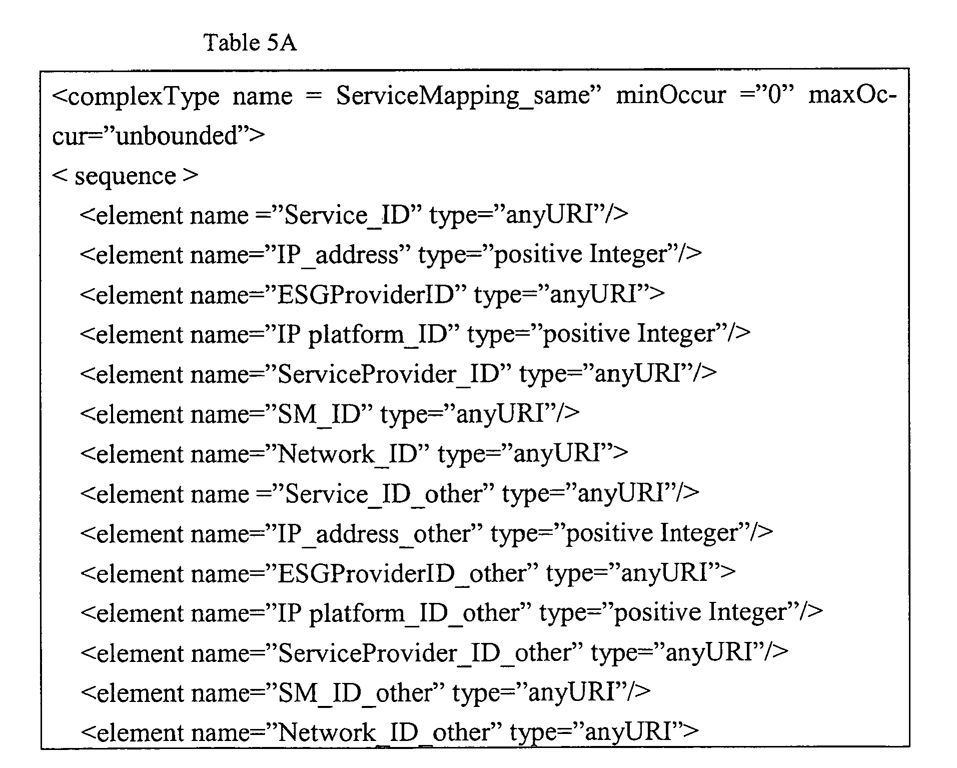

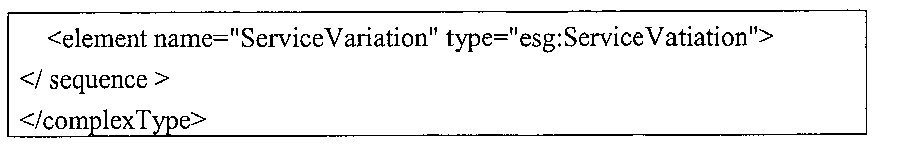

The service variation type may be used in the service mapping information as in Table 5B.

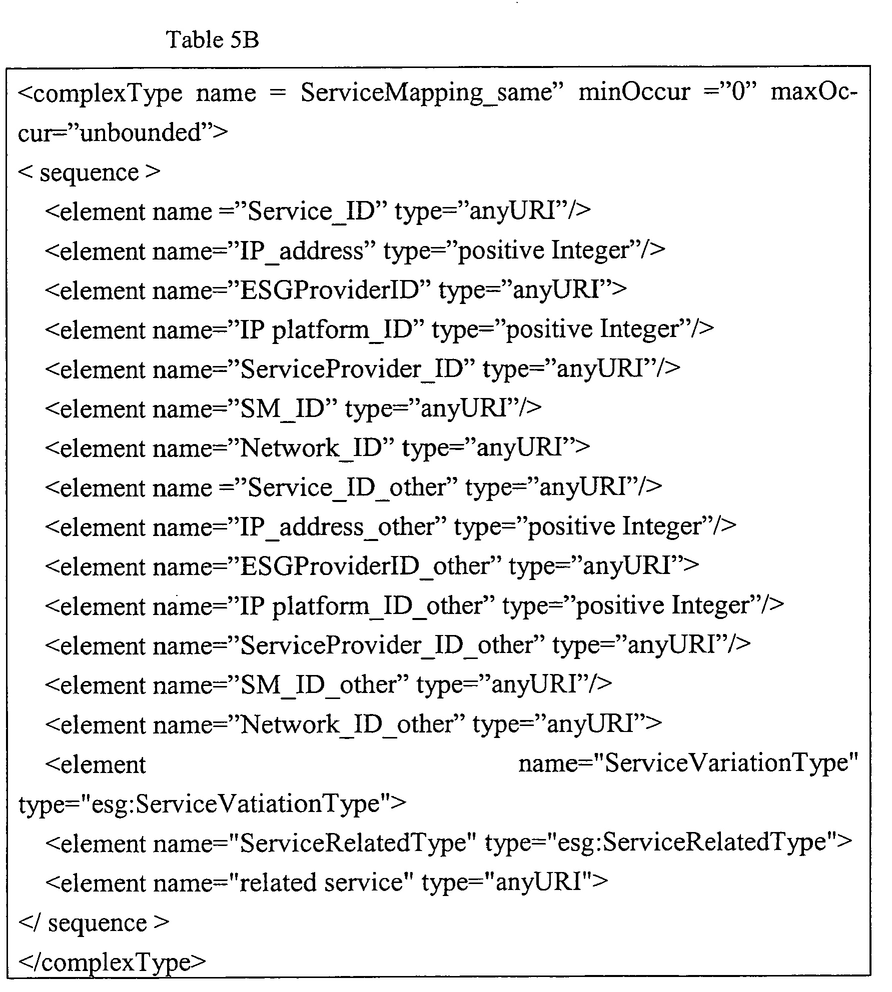

Table 5C is another example of the service mapping information.

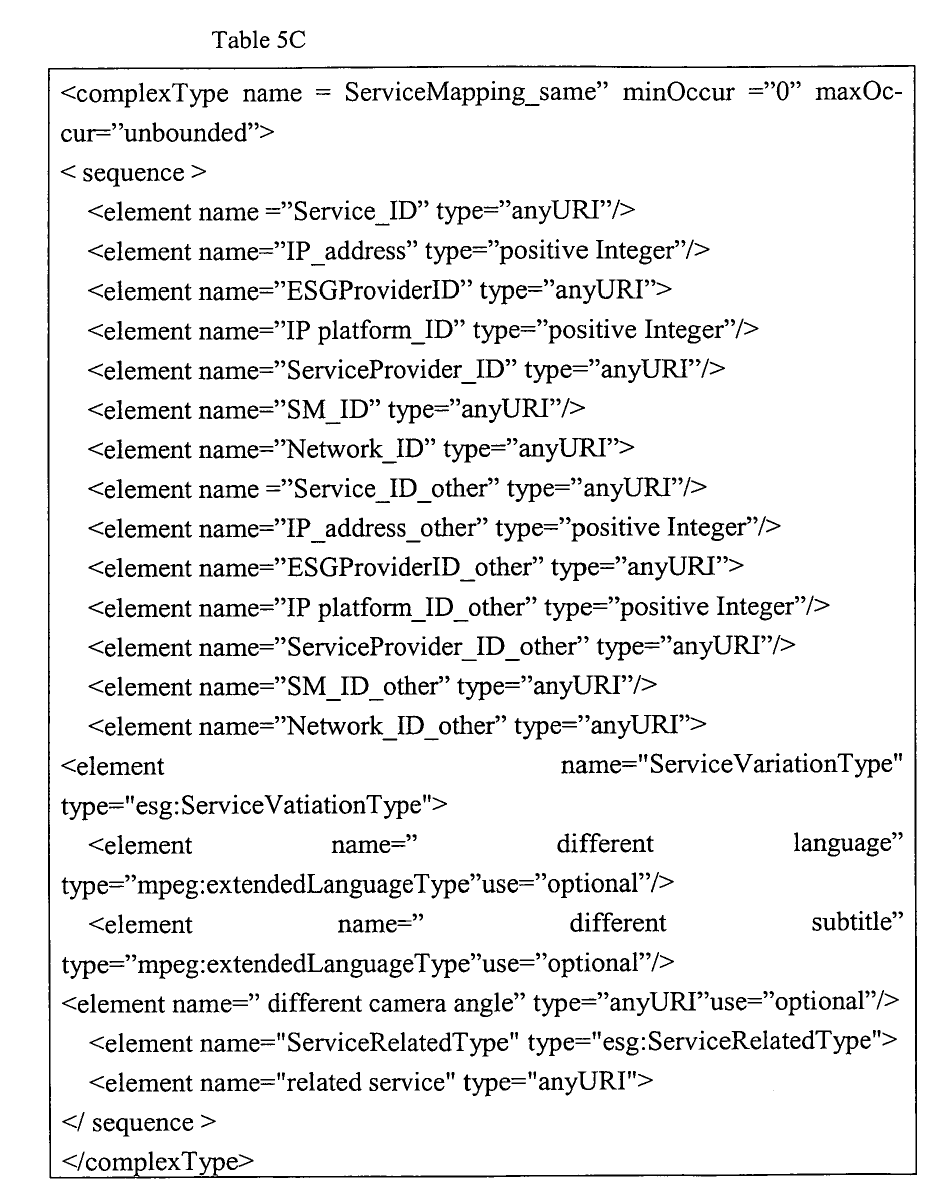

When the service variation information is carried in a PSI/SI that has already included information for each service, i.e., an IP address, a transport stream ID, a network ID, and the like, the information can be added to the PSI/SI such that other IEs of the service variation information do not overlap with original IEs included in the PSI/SI.

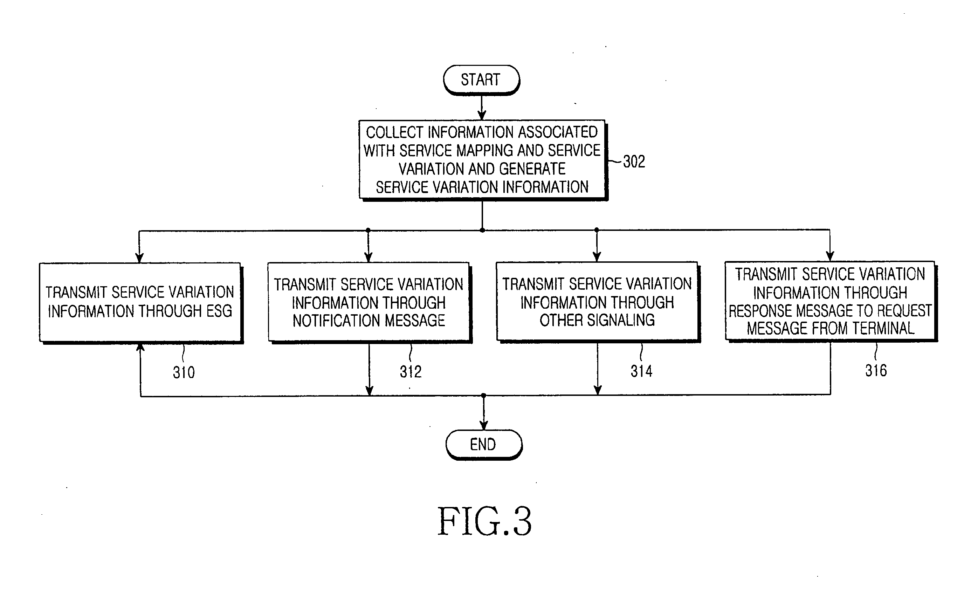

FIG. 3 is a flowchart illustrating the operation of a network entity according to an exemplary embodiment of the present invention. Herein, the network entity is at least one entity capable of collecting and transmitting information associated with service mapping and service variation. For example, the network entity may be an SA block or an SM block, or both.

Referring to FIG. 3, in step 302, the network entity collects information associated with service mapping and service variation for a service of a current network by referring to information regarding a service that can be provided by the current network and services that can be provided by other networks that are adjacent to or are not adjacent to the current network, and generates service variation information by referring to the collected information. The service variation information may include service variation IEs for the services of the same content provided in English in other networks, but provided in a local language in the current network, and movie services provided with an English subtitle in other networks, but provided with a local-language subtitle in the current network.

The service variation information is transmitted to a terminal in at least one of steps 310 through 312 according to standard rules or system designers' intentions. More specifically, in step 310, the service variation information is transmitted to the terminal through an ESG. In step 312, the service variation information is transmitted to the terminal through a notification message. In step 314, the service variation information is transmitted to the terminal through a predetermined signaling message. In step 316, the service variation information is transmitted to the terminal through a response message that is transmitted by the network entity over an interactive network in response to a request message transmitted by the terminal over the interactive network.

In handover or roaming, if the home network provides service variation information, the terminal can select reception parameters based on the service variation information before turning to new reception parameters. If other networks provide the service variation information, the terminal can detetrmine service variations based on the service variation information and thus does not need to analyze the service variation. Therefore, it is very useful for each network to provide the service variation information.

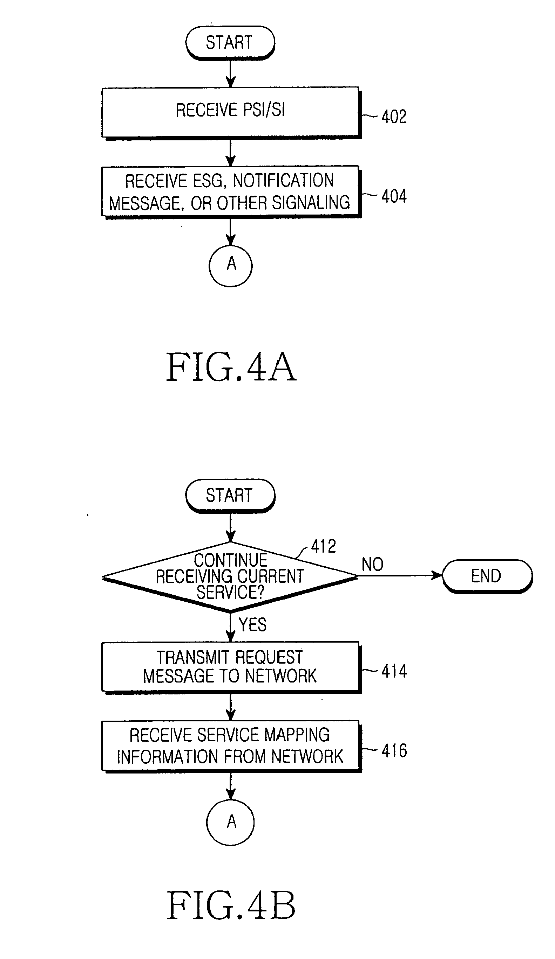

FIGs. 4A through 4C are flowcharts illustrating the operation of a terminal according to an exemplary embodiment of the present invention, in which service variation information is transmitted through service mapping information. The operation in FIG. 4A or FIG. 4B is performed according to a means for transmitting the service mapping information in a network.

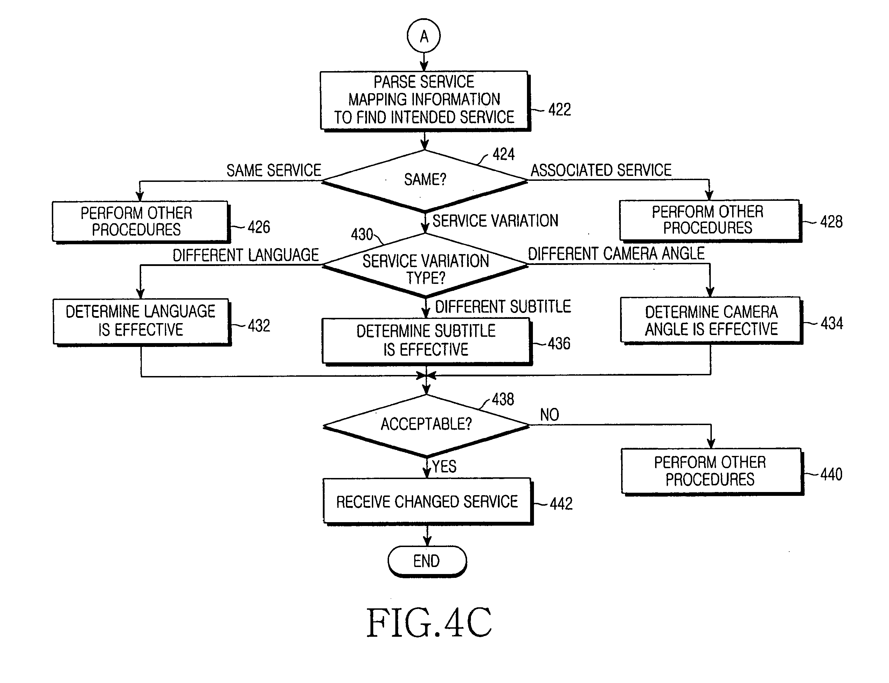

Referring to FIG. 4A, the terminal receives PS/SI in step 402, receives an ESG, a notification message, or other signaling in step 404, and then goes to step 422 of FIG. 4C. Referring to FIG. 4B, in step 412, the terminal determines if it can receive the current service in the current network, i.e., if the terminal can continue to receive the current service in another service coverage area. If the terminal determines to continue receiving the current service in the other service coverage area, the terminal transmits a request message for service mapping information to the network in step 414, receives the service mapping information as a response to the request message in step 416, and goes to step 422 of FIG. 4C.

Referring to FIG. 4C, in step 422 the terminal parses the service mapping information in order to check if its intended service exists and determines in step 424 if a service mapped to the current service exists in the other service coverage area. As a result of the determination, if the same service as the current service is found or another service associated with the current service exists, the terminal performs corresponding procedures in steps 426 and 428.

If a changed service of the current service is found, in step 430 the terminal parses service variation information included in the service mapping information in order to check a service variation type of the changed service. For the service variation type "different language", in step 432 the terminal determines if the language of the changed service is effective to a user. For the service variation type "different subtitle", in step 436 the terminal determines if the subtitle of the changed service is effective to the user. For the service variation type "different camera angle", in step 434 the terminal determines if the camera angle of the changed service is effective to the user. For the determinations in steps 432 through 436, the terminal notifies the user of the different language/subtitle/camera angle in order to inquire of the user about whether to receive the changed service with the different language/subtitle/camera angle.

In step 438 the terminal determines if the user accepts the changed service with the different language/subtitle/camera angle. If so, in step 442 the terminal moves to the other service coverage area and then receives the changed service according to reception parameters of the other service coverage area. If the user does not desire to use the changed service, the terminal performs other procedures in step 440. In another case, the terminal may automatically select whether to receive the changed service without user's intervention according to a predetermined operation mode in step 438.

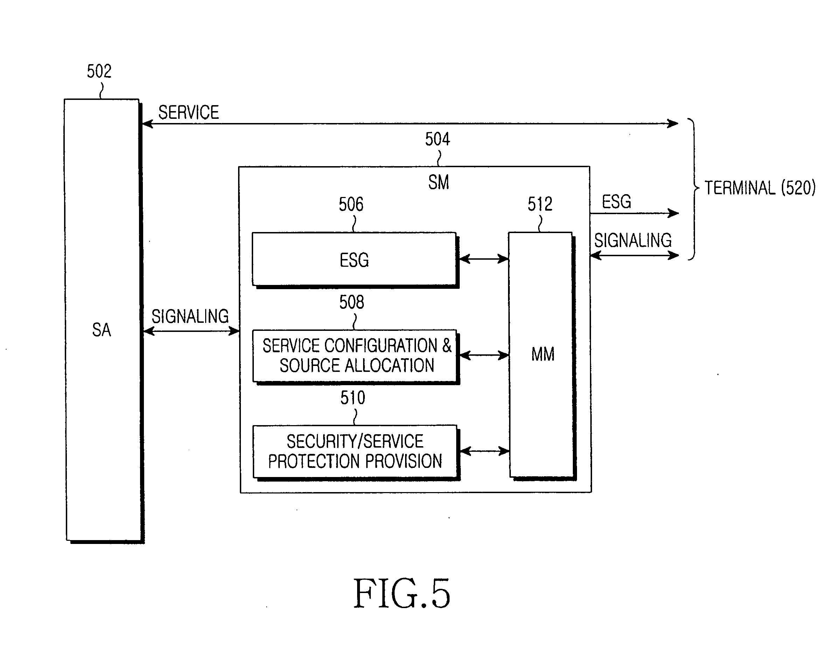

FIG. 5 is a block diagram illustrating the structure of a network according to an exemplary embodiment of the present invention, in which only the entities for performing logical functions associated with an exemplary embodiment of the present invention in the network are shown.

Referring to FIG. 5, an SA block 502 generates service data including a video stream and an audio stream by combining related metadata and broadcast content from multiple sources in order to provide a particular service, provides the service data, which is encoded in a format that can be understood by a terminal, to the terminal via streaming or file carousel delivery, and generates metadata including service description used for an ESG. In particular, the SA block 502 separately provides metadata regarding services of the above-described service types that are effective to a roaming user for use in generation of a special ESG.

An ESG entity 506 in an SM block 504 generates an ESG using the metadata provided by the SA block 502 and transmits the generated ESG. When the ESG is used to transmit service variation information, the ESG entity 506 inserts the service variation information into the ESG, and the ESG is delivered from an MM block 512 to a terminal 520 over a broadcasting network and/or an interactive network.

A service configuration & resource allocation entity 508 is in charge of service configuration and network resource allocation, contends for the bandwidth of a broadcast bearer by communicating with the SA block 502, assigns services in locations on a broadcast network topology or determines service bandwidth, and schedules services over time. A security/service protection provision entity 510 is in charge of security and authentication, service protection, and service provisioning. The entities 506 through 510 perform functions necessary to perform handover and roaming by being connected with the MM block 512. The MM block 512 performs operations associated with the mobility of the terminal, especially, operations associated with handover and roaming.

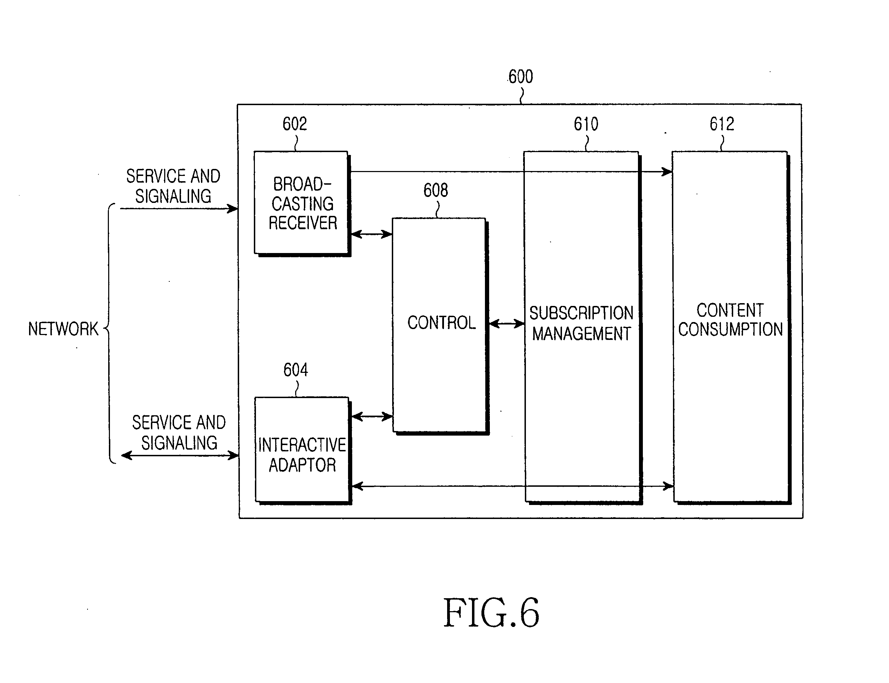

FIG. 6 is a block diagram illustrating the structure of a terminal according to an exemplary embodiment of the present invention.

Referring to FIG. 6, a receiver 600 includes an interactive adaptor 604 capable of accessing an interactive network as well as a broadcasting receiver 602 capable of receiving a broadcasting signal from a broadcasting network. The broadcasting receiver 602 receives service data or signaling information such as PSI/SI and an ESG from the broadcasting network, and the interactive adaptor 604 transmits and receives the service data or the signaling information over the interactive network. A control block 608 performs Mobility Management (MM) for processing handover related operations by interworking with a subscription management block 610 that is in charge of rights management/acquisition associated with service subscription and decryption of service content. The control block 608 also controls the broadcasting receiver 602 or the interactive adaptor 604 according to an exemplary embodiment of the present invention for reception of service variation information. If necessary, the control block 608 transmits a request message for the service variation information through the interactive adaptor 604, receives the service variation information as a response to the request message through the interactive adaptor 604, and then parses the received service variation information.

The received service variation information is used for the control block 608 to determine the possibility of service continuity. Under the control of the control block 608, a content consumption block 612 provides audio and video of a broadcasting service to the user or stores them in order to provide the stored audio and video to the user later.

As is apparent from the foregoing description, before moving to a new service coverage area, a terminal can be provided with service variation information indicating what change is to be made to a service in the new service coverage area, thereby determining service continuity for the terminal.

While the invention has been shown and described with reference to an exemplary embodiment thereof, it will be understood by those skilled in the art that various changes in form and details may be made therein without departing from the spirit and scope of the invention.

## Claims

1. A method for transmitting service variation information in a digital broadcasting system, the method comprising the steps of:
aggregating information about a first service that can be provided by a first network and information about a second service in a second network related to the first service;
generating service variation information indicating variation between the second service and the first service; and
transmitting the service variation information to a terminal in the first network through a transmission bearer.

2. The method of claim 1, wherein the service variation information includes a service variation type information element indicating at least one of the following: the second service is the same content as the first service, but is expressed in a different language than with the first service, the second service has a different subtitle than with the first service, and the second service has video acquired from a different camera angle than with the first service.

3. The method of claim 2, wherein the service variation information further comprises at least one of a service identifier (ID) of the second service, an Internet Protocol (IP) address of the second service, a provider ID of the second service, an IP platform ID of the second service, a network ID of the second network.

4. The method of claim 1, wherein the transmission of the service variation information includes transmitting the service variation information to the terminal through at least one of an Electronic Service Guide (ESG) of a broadcasting network, Program Specific Information and Service Information (PSI/SI) of the broadcasting network, and a response message of an interactive network that is accessible by the terminal.

5. The method of claim 1, wherein the transmission bearer includes at least one of a broadcasting network and an interactive network, both of which are accessible by the terminal.

6. A method for receiving service variation information in a digital broadcasting system, the method comprising the steps of:
receiving service variation information indicating variation between a second service in a second network and a first service that can be provided by a first network, from the first network through a transmission bearer, the second service being related to the first service;
determining whether to receive the second service from the second network from the first service using the received service variation information; and
receiving the second service from the first service when moving to the second network if determining to receive the second service.

7. The method of claim 6, wherein the service variation information includes a service variation type information element indicating at least one of the following: the second service is the same content as the first service, but is expressed in a different language than with the first service, the second service has a different subtitle than with the first service, and the second service has video acquired from a different camera angle than with the first service.

8. The method of claim 7, wherein the service variation information further includes at least one of a service identifier (ID) of the second service, an Internet Protocol (IP) address of the second service, a provider ID of the second service, an IP platform ID of the second service, a network ID of the second network.

9. The method of claim 6, wherein the reception of the service variation information includes receiving the service variation information through at least one of an Electronic Service Guide (ESG) of a broadcasting network, Program Specific Information and Service Information (PSI/SI) of the broadcasting network, and a response message of an interactive network that is accessible by a terminal.

10. The method of claim 6, wherein the transmission bearer includes at least one of a broadcasting network and an interactive network, both of which are accessible by a terminal.

11. A digital broadcasting system which transmits service variation information, the digital broadcasting system comprising:
a network entity for aggregating information about a first service that can be provided by a first network and information about a second service in a second network related to the first service, generating service variation information indicating variation between the second service and the first service, and transmitting the service variation information through a transmission bearer; and
a terminal for receiving the service variation information through the transmission bearer, determining whether to receive the second service from the second network from the first service using the received service variation information, and receiving the second service from the first service when moving to the second network if determining to receive the second service.

12. The digital broadcasting system of claim 11, wherein the service variation information includes a service variation type information element indicating at least one of the following: the second service is the same content as the first service, but is expressed in a different language than with the first service, the second service has a different subtitle than with the first service, and the second service has video acquired from a different camera angle than with the first service.

13. The digital broadcasting system of claim 12, wherein the service variation information further includes at least one of a service identifier (ID) of the second service, an Internet Protocol (IP) address of the second service, a provider ID of the second service, an IP platform ID of the second service, a network ID of the second network.

14. The digital broadcasting system of claim 11, wherein the service variation information is transmitted through at least one of an Electronic Service Guide (ESG) of a broadcasting network, Program Specific Information and Service Information (PSI/SI) of the broadcasting network, and a response message of an interactive network that is accessible by the terminal.

15. The digital broadcasting system of claim 11, wherein the transmission bearer includes at least one of a broadcasting network and an interactive network, both of which are accessible by the terminal.
